# EUROPEAN PATENT APPLICATION

(11) **EP 1 645 358 A2**
(43) Date of publication of application: **12.04.2006**
(21) Application number: 05255784.0
(22) Date of filing: 19.09.2005
(51) Int. Cl.: B23P 19/06, B21J 15/50, B25B 27/06

(54) **Performance enhancing repair tool**

(30) Priority: 07.10.2004 US 616722 P
(71) Applicant: TEXTRON, INC., Providence, Rhode Islands 02903 (US)
(72) Inventor: Fakhri Toosky, Rahmatollah, San Clemente, CA 92637 (US); Eshraghi, Soheil, Irvine, CA 92604 (US); Kurlinkus, Rob, Santa ana, CA 92704 (US)
(74) Representative: Mackenzie, Andrew Bryan

(57) **Abstract**

A tool (100, 200, 300, 400) for removing a nut plate (130) after the nut plate (130) has been installed in an aperture (132) in a workpiece (128). One version of the tool (100) is for removing the nut plate (130) from the nut side using a power tool (118), while another version of the tool (200) is for manually removing the nut plate from the nut side. Still another version of the tool (300) is for removing the nut plate from the bolt side using a power tool (118), while another version of the tool (400) is for manually removing the nut plate (130) from the bolt side. Another aspect provides a tool (500) for conditioning a hole (550), such as for conditioning a hole (550) prior to installing a nut plate.

## Description

### Related Application (Priority Claim)

This application claims the benefit of United States Provisional Application Serial No. 60/616,722, filed October 7, 2004, which is hereby incorporated herein by reference in its entirety.

### Background

One aspect of the invention generally relates to tools and methods for removing installed nut plates, and another aspect generally relates to tools and methods for conditioning holes in workpieces, such as for conditioning a hole before installing a nut plate.

Fasteners used in association with fluid tanks, such as fuel tanks or water tanks, for aircraft or the like present a problem in preventing leakage through the openings for the fasteners. Fasteners used in such installations may include a nut plate and a nut which are part of an assembly. There are many different design configurations of nut plates being used today. Two major classes are riveted nut plates and rivetless nut plates.

In riveted nut plates, two rivets are employed for attaching the body of the nut plate to the workpiece. To eliminate the potential for leakage, sealant is used between the structure and the nut plate.

With regard to rivetless nut plates, some designs provide that a sleeve is flared against a workpiece. One example of this type of rivetless nut plate is disclosed in United States Patent No. 4,732,518, which is hereby incorporated herein by reference in its entirety. The '518 patent illustrates the insertion of a sleeve inside a workpiece against heavy interference forces and then deformation of the sleeve to produce flaring of the end of the sleeve. The sleeve has a serration/lobe configuration thereon with the serration/lobe configuration being long and tapered such that the serrations/lobes extend into the walls of the workpiece. The tapered feature, length and specific geometry are necessary to make installation possible with the method of installation which was chosen for its application. The main object of the '518 patent with its tapered and extended serration/lobe configuration was to enhance the fatigue life of the workpiece by distributing the load throughout the workpiece and providing expansion due to the insertion of the sleeve into the workpiece, and to cold work the material adjacent the perimeter of the workpiece aperture.

Other nut plate designs do not rely on flaring of the sleeve. United States Patent Nos. 5,096,349, 5,245,743, 5,405,228 and pending United States application Serial Nos. 10/272,721 (filed October 17, 2002) and 10/929,701 (filed August 30, 2004) disclose rivetless nut plate designs which do not rely on flaring of the sleeve, and these five items are hereby incorporated herein by reference in their entirety. While some rivetless nut plate designs rely on adhesive for attaching the nut plate to the structure, the designs disclosed in the five items cited above rely on heavily cold-worked holes and high interference engagement utilizing a hardened pin as the installation tool to expand a sleeve element into engagement with a workpiece structure. Because of high level expansion, the friction forces created are intended to retain the nut plate and provide expected mechanical properties.

Once installed, most rivetless nut plates are removed by drilling out the flared sleeve portion, or by drilling out the rivets while holding the nut plate. Drilling out the rivets and the sleeve from the holes requires a special skill. The procedure, aside from being cumbersome and time consuming, leaves behind contaminating metal chips. Additionally, it often enlarges the hole size requiring an oversized nut plate for replacement. Safety considerations, for drilling out the old nut plate, are required to prevent damage to surrounding structure and the operator.

### Objects and Summary

An object of an embodiment of the present invention is to provide an improved tool and method for removing installed rivetless nut plates, either manually or by using a power tool.

Another object of an embodiment of the present invention is to provide a tool and method for conditioning a hole, such as before installation of a rivetless nut plate.

Briefly, and in accordance with at least one of the foregoing objects, one aspect of the present invention provides a tool for removing a nut plate after the nut plate has been installed in an aperture in a workpiece.

A first embodiment of the present invention provides a tool which is configured to be used in association with a power tool to remove the nut plate from a nut side of the nut plate. Specifically, the tool includes a nosepiece which is configured to be engaged with a power tool. During removal of the nut plate, the nosepiece is pressed against the workpiece such that the nut plate is disposed in an opening provided in the nosepiece. A mandrel with serrations is inserted through the nut plate and the nosepiece, and is inserted into the power tool. The power tool is thereafter actuated to grip the serrations on the mandrel and pull on the mandrel until a head of the mandrel contacts and pulls on the nut plate, causing the nut plate to dislodge from the aperture in the workpiece.

A second embodiment of the present invention is similar to the first embodiment, but provides a tool which is specifically configured for manual use (i.e., for operation by hand rather than for use with a power tool). The tool includes a base which is positioned over the installed nut plate. A mandrel with threads is inserted through both the nut plate and base and is threaded into a threaded insert which is retained in a knob. Then, the knob is rotated which causes the mandrel to effectively retract into the knob, causing the head of the mandrel to pull on the nut plate and dislodge the nut plate from the aperture in the workpiece.

A third embodiment of the present invention provides a tool which is configured to be used in association with a power tool to remove the nut plate from a bolt side of the nut plate. Specifically, the tool includes a nosepiece which is configured to be engaged with a power tool. During removal of the nut plate, the nosepiece is pressed against a sleeve of the nut plate. On the other side of the workpiece, a mandrel with serrations is inserted through a sleeve which is pressed against the workpiece. The mandrel is inserted through the sleeve, through the nut plate, through the nosepiece, and into the power tool. The power tool is then actuated to grip the serrations on the mandrel and pull on the mandrel until a head of the mandrel contacts the sleeve after which time further pulling on the mandrel by the power tool causes the nosepiece to push on the sleeve of the nut plate, causing the nut plate to dislodge from the aperture in the workpiece.

A fourth embodiment of the present invention is similar to the third embodiment, but provides a tool which is specifically configured for manual use (i.e., for operation by hand rather than for use with a power tool). The tool includes a base which is positioned over the installed nut plate. A mandrel with threads is retained by the base, and is inserted through the nut plate, through a nosepiece and nosepiece support, and is threaded into a threaded insert in a knob. Then, the knob is rotated which causes the mandrel to effectively retract into the knob, causing the nosepiece to push on the sleeve of the nut plate, causing the nut plate to dislodge from the aperture in the workpiece.

Another aspect of the present invention provides a tool for conditioning a hole, such as for conditioning a hole prior to installing a nut plate. The tool includes a mandrel having serrations as well as a rim on the underside of its head, and a nosepiece which has a rim on its facing surface. The nosepiece is configured for threadable engagement with a power tool and for contacting a workpiece, such that the rim on the facing surface surrounds the hole. The mandrel is extended through the hole and the nosepiece and inserted into the power tool, such that the rim on the underside of the head of the mandrel contacts the workpiece and surrounds the hole. As such, the rim on the nosepiece is pressed against one side of the workpiece and the rim on the mandrel is pressed against the other side of the workpiece. Then, the power tool is actuated to grip and pull on the mandrel, causing the rims to be pulled toward each other, thereby applying a compressive force to the workpiece in the area around the holes, causing the area of the workpiece surrounding the hole to reshape and become fatigue enhanced. The reshaping actually causes the hole to become smaller.

### Brief Description of the Drawings

The organization and manner of the structure and operation of the invention, together with further objects and advantages thereof, may best be understood by reference to the following description, taken in connection with the accompanying drawings, wherein like reference numerals identify like elements in which:
Figure 1 is a view which illustrates a tool which is in accordance with a first embodiment of the present invention;
Figures 2 and 3 are cross-sectional sequence views which illustrate use of the tool of Figure 1;
Figure 4 is a view which illustrates a tool which is in accordance with a second embodiment of the present invention;
Figures 5 and 6 are cross-sectional sequence views which illustrate use of the tool of Figure 4;
Figure 7 is a view which illustrates a tool which is in accordance with a third embodiment of the present invention;
Figures 8 and 9 are cross-sectional sequence views which illustrate use of the tool of Figure 7;
Figure 10 is a view which illustrates a tool which is in accordance with a fourth embodiment of the present invention;
Figures 11 and 12 are cross-sectional sequence views which illustrate use of the tool of Figure 10;
Figure 13 is a cross-sectional view which illustrates a hole conditioning tool which is in accordance with yet another embodiment of the present invention;
Figures 14 and 15 are cross-sectional sequence views which illustrate use of the tool of Figure 13;
Figure 16 is a close up view of what is shown in circle A in Figure 15, showing the shape of the underside of the head portion of a mandrel component of the tool shown in Figures 13-15;
Figure 17 is a perspective view of a nosepiece component of the tool shown in Figures 13-15; and
Figure 18 is a enlarged cross-sectional view of the nosepiece component, taken along line 18-18 of Figure 17.

### Description

While the present invention may be susceptible to embodiment in different forms, there are shown in the drawings, and herein will be described in detail, embodiments thereof with the understanding that the present description is to be considered an exemplification of the principles of the invention and is not intended to limit the invention to that as illustrated and described herein.

One aspect of the present invention involves providing an improved tool and method for removing an installed rivetless nut plate, either manually or by using a power tool, such as a rivetless nut plate as disclosed in United States application Serial Nos. 10/272,721 (filed October 17, 2002) and 10/929,701 (filed August 30, 2004), both of which have been incorporated herein by reference in their entirety.

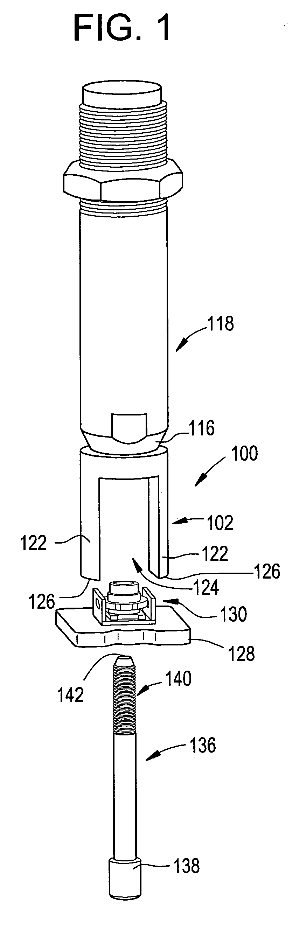

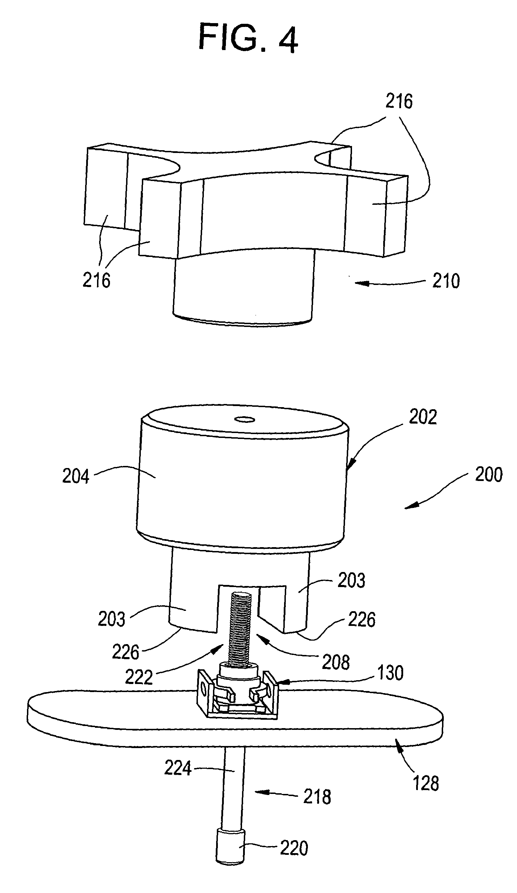

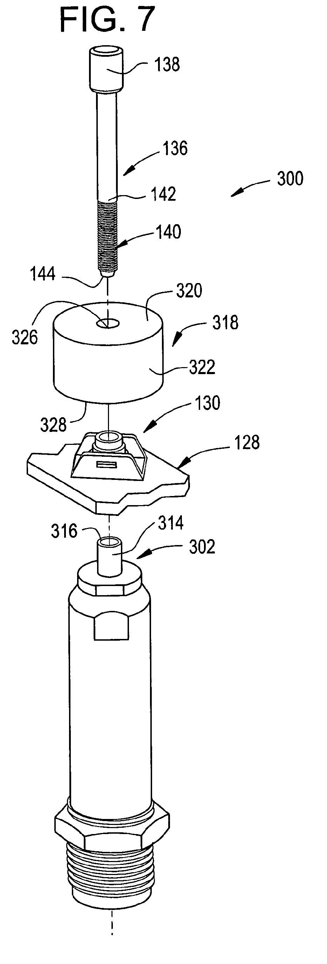

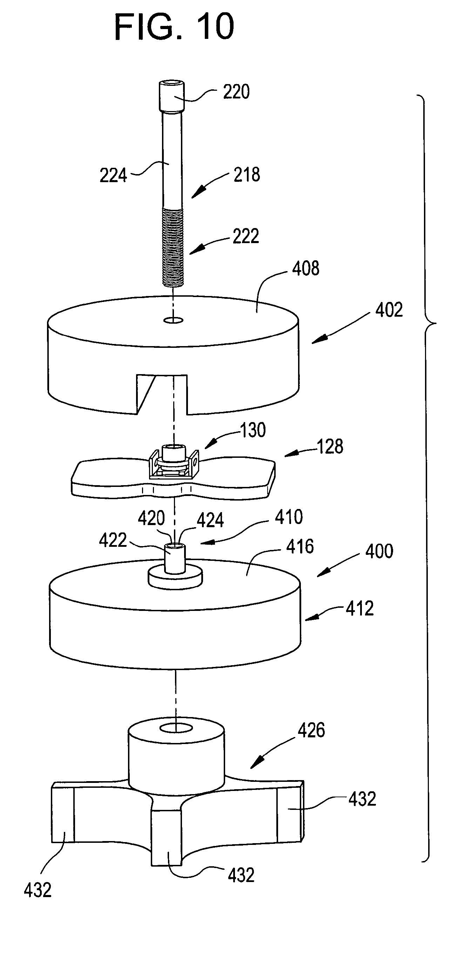

Specifically, Figure 1 shows a tool 100 for use with a power tool for removing a nut plate from the nut side of the nut plate, and Figure 4 shows a manual tool 200 for removing a nut plate from the nut side of the nut plate. Likewise, Figure 7 shows a tool 300 for use with a power tool for removing a nut plate from the bolt side of the nut plate, and Figure 10 shows a manual tool 400 for removing a nut plate from the bolt side of the nut plate. Regardless, each tool provides that a nut plate can be removed cleanly, without requiring special skill.

As discussed, Figures 1 and 7 illustrate tools which are configured to be used in association with a power tool to remove an installed nut plate. Specifically, each tool is preferably configured to be used in association with a power tool such as described in U.S. Patent No. 5,425,164, which is hereby incorporated herein by reference in its entirety. Such a tool is available from Textron as Hand Hydraulic Riveter Model G750A, and includes jaws for gripping and pulling. Alternatively, Textron's Lightweight CherryMax® Power Tool Model G704B may be used, or some other appropriate power tool.

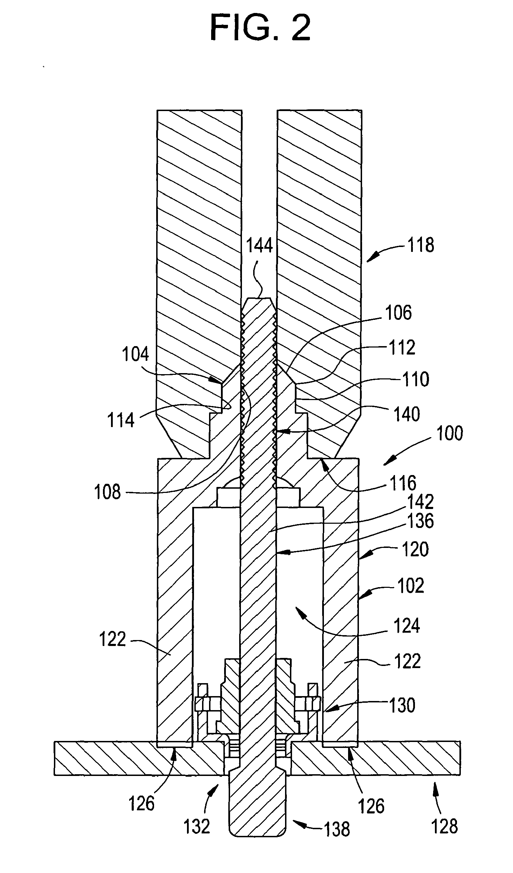

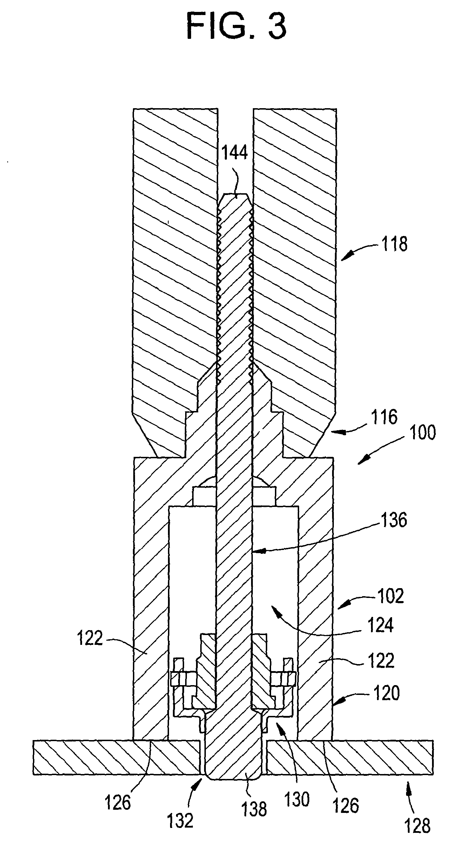

As shown in Figure 1, the tool 100 includes a nosepiece 102. As shown in Figures 2 and 3, the nosepiece 102 includes a generally cylindrical portion 104 at its end 106, and a bore 108 is provided in the cylindrical portion 104. An external surface 110 of the cylindrical portion 104 of the nosepiece 102 includes threads 112 which are configured to threadably engage corresponding threads 114 which are provided in the end 116 of the power tool 118. The nosepiece 102 includes a main portion 120 which generally extends from the cylindrical portion 104, and the main portion 120 includes two extending walls or arms 122 which are spaced apart to provide an opening 124. Each of the arms 122 includes an end surface 126 which, as will be described, is pressed against the workpiece 128 during removal of the nut plate 130 from an aperture 132 in the workpiece 128. A mandrel 136 having an enlarged head portion 138 and serrations 140 on a shaft portion 142 is also provided.

During removal of the nut plate 130, the nosepiece 128 is pressed against the workpiece 128 (i.e., the end surfaces 126 of the arms 122 of the nosepiece 102 are pressed against the workpiece 128) such that the nut plate 130 is disposed in the opening 124 between the arms 122. The end 144 of the mandrel 136 which is proximate the serrations 140 is inserted through the nut plate 130, from the other side of the workpiece 128, through the bore 108 provided at the end 106 of the nosepiece 102 and into the power tool 118 such that the head 138 of the mandrel 136 is held flush against the nut plate 130. The power tool 118 is then actuated to grip the serrations 140 on the mandrel 136 (i.e., jaws in the power tool 118 grip the serrations 140) and pull on the mandrel 136 until the head 138 of the mandrel 136 contacts and pulls on the nut plate 130, as shown in Figure 2, causing the nut plate 130 to dislodge from the aperture 132 in the workpiece 128, as shown in Figure 3. Subsequently, the power tool 118, nosepiece 102, mandrel 136 and nut plate 130 are collectively withdrawn from the workpiece 128, and the mandrel 136 is released by the power tool 118.

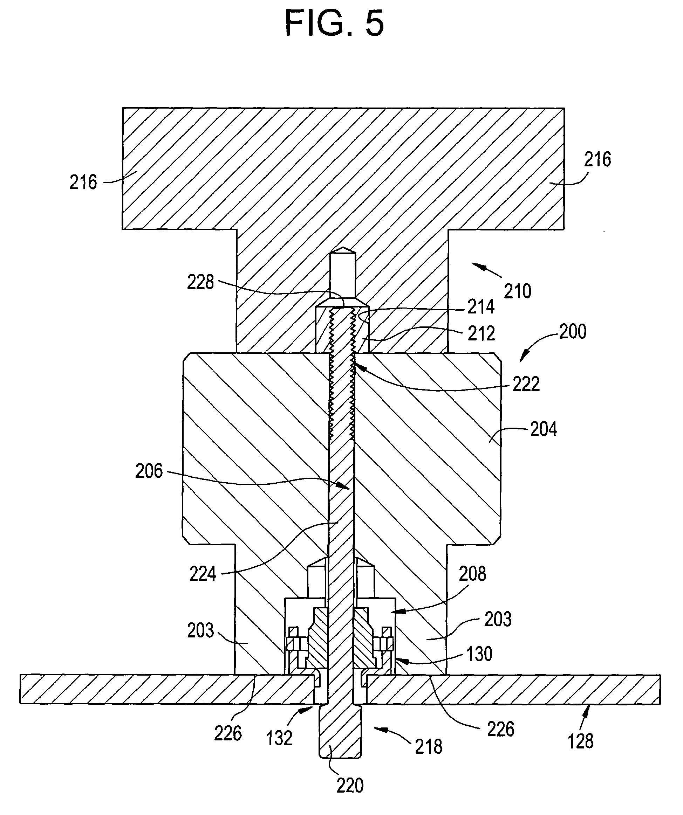

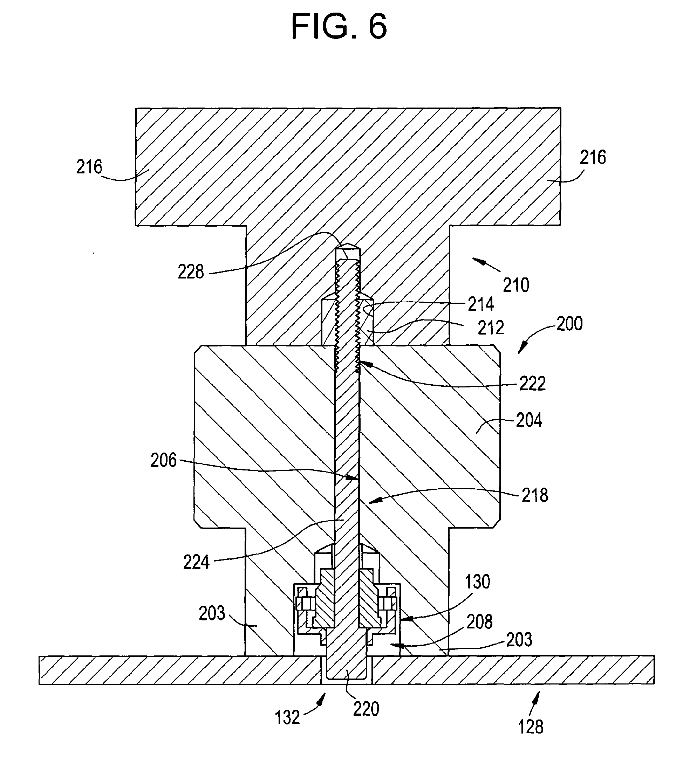

The tool 200 illustrated in Figure 4 is configured to work quite similarly to the tool 100 shown in Figures 1-3, but is configured to be operated by hand rather than with a power tool. The tool 200 includes a base 202 which has two spaced apart arms 203 which generally extend from a main portion 204. As shown in Figures 5 and 6, a throughbore 206 extends through the main portion 204 and communicates with the space 208 which is between the arms 203.

The tool 200 also includes a knob 210 which has a threaded insert 212 disposed in a bore 214. The knob 201 also includes a plurality of finger grip portions 216 which facilitate gripping and rotating the knob. A mandrel 218 having an enlarged head portion 220 and threads 222 on a shaft portion 224 is also provided.

During removal of the nut plate 130, the base 202 is pressed against the workpiece 128 (i.e., the end surfaces 226 of the arms 203 of the base 202 are pressed against the workpiece 128) such that the nut plate 130 is disposed in the opening 208 between the arms 203. The end 228 of the mandrel 218 which is proximate the threads 222 is inserted through the nut plate 130, from the other side of the workpiece 128, through the bore 206 provided in the base 202 such that the head 220 of the mandrel 218 is held flush against the nut plate 130, and is threaded into the threaded insert 212 in the knob 210. Then, the knob 210 is rotated. As the knob 210 is rotated, the mandrel 218 effectively retracts into the knob 210, as shown in Figure 5, causing the head 220 of the mandrel 218 to pull on the nut plate 130, causing the nut plate 130 to dislodge from the aperture 132 in the workpiece 128, as shown in Figure 6. Subsequently, the knob 210, base 202, mandrel 218 and nut plate 130, collectively, can be withdrawn from the workpiece 128.

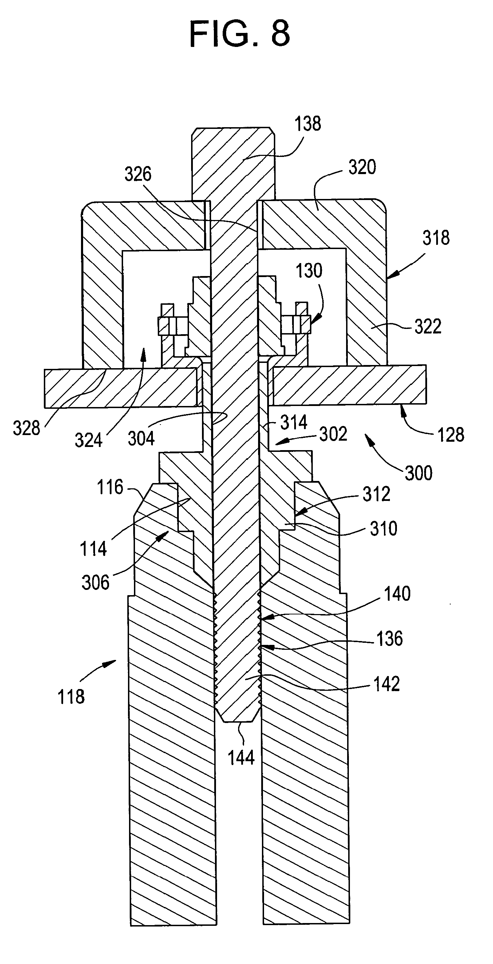

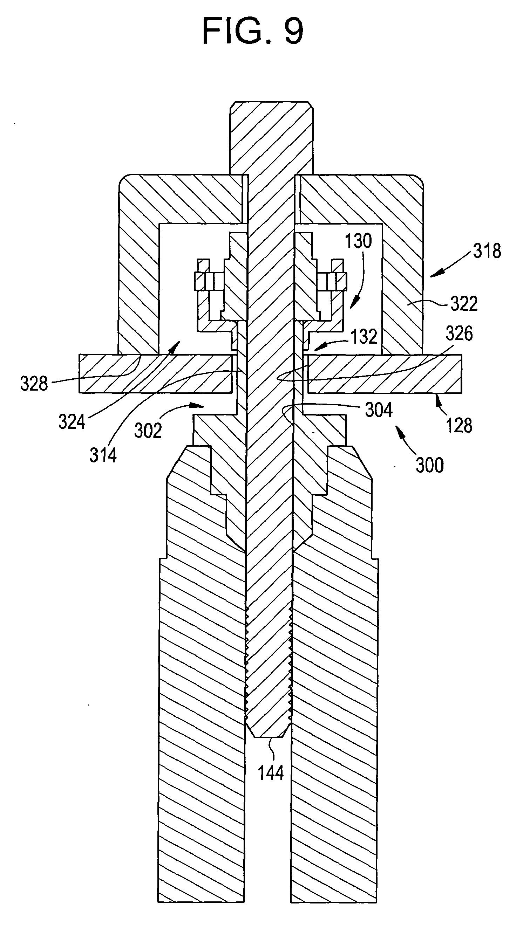

The tool 300 illustrated in Figure 7 includes a nosepiece 302. As shown in Figures 8 and 9, the nosepiece 302 includes a throughbore 304, and has a generally cylindrical portion 306. An external surface 310 of the cylindrical portion 306 of the nosepiece 302 includes threads 312 which are configured to threadably engage corresponding threads 114 which are provided in the end 116 of the power tool 118. The nosepiece 302 also includes an outwardly extending cylindrical portion 314 which has an end surface 316 which is configured to engage and push on an installed nut plate 130.

The tool 300 also includes a base component 318 which is generally cylindrical having a base portion 320 and a cylindrical side wall 322 which extends from the base portion 320 and provides an opening 324, such that the base component 318 is generally cup-like. A bore 326 is provided in the base portion 320, generally at its center. The cylindrical side wall 322 includes a surface 328 which, as will be described, is pressed against the workpiece 128 during removal of the nut plate 130 from an aperture 132 in the workpiece 128. A mandrel 136 having an enlarged head portion 138 and serrations 140 on a shaft portion 142 is also provided.

During removal of the nut plate 130, the base component 318 of the tool 300 is pressed against the workpiece 128 such that the nut plate 130 is disposed in the opening 324. The end 144 of the mandrel 136 which is proximate the serrations 140 is inserted through the bore 326 in the base 320, through the nut plate 130, through the nosepiece 302, and into the power tool 118 on the other side of the workpiece 128 such that the head 138 of the mandrel 136 is in contact with the base component 318. The power tool 118 is then actuated to grip the serrations 140 on the mandrel 130 (i.e., jaws in the power tool 118 grip the serrations 140) and pull on the mandrel 136, causing the end surface 316 of the nosepiece 302 to push on the nut plate 130, as shown in Figure 8, causing the nut plate 130 to dislodge from the aperture 132 in the workpiece 128, as shown in Figure 9. Subsequently, the mandrel 136 is released from the power tool 118 and the power tool 118 is withdrawn from the workpiece 128. At this point, the mandrel 136, base 318 and nut plate 130 can also be withdrawn from the other side of the workpiece 128.

The tool 400 illustrated in Figure 10 is configured to work quite similarly to the tool 300 shown in Figures 7-9, but is configured to be operated by hand rather than with a power tool. The tool 400 includes a base component 402 which is generally cylindrical and includes an opening 404 on one side 406 of the base 402, generally at its center. A mandrel 218 having an enlarged head portion 220 and a shaft 224 extending from the head portion 220 is retained by the base 402. Specifically, the head portion 220 of the mandrel 218 contacts the one side 408 of the base 402, and the shaft 224 of the mandrel 218 extends through the opening 405 in the base 402. Threads 222 are provided on the shaft 224 of the mandrel 218.

The tool 400 also includes a nosepiece member 410 and a nosepiece support 412 which is configured to retain and support the nosepiece member 410. The nosepiece support 412 is generally cylindrical having a threaded opening 414 for threadably receiving a corresponding externally threaded portion 418 on the nosepiece 410. The nosepiece 410 includes a throughbore 420, as well as an outwardly extending cylindrical portion 422 which has an end surface 424 which is configured to engage and push on an installed nut plate 130. The tool 400 also includes a knob 426 which has a threaded insert 428 disposed in a bore 430. The knob 426 also includes a plurality of finger grip portions 432 which facilitate gripping and rotating the knob 426.

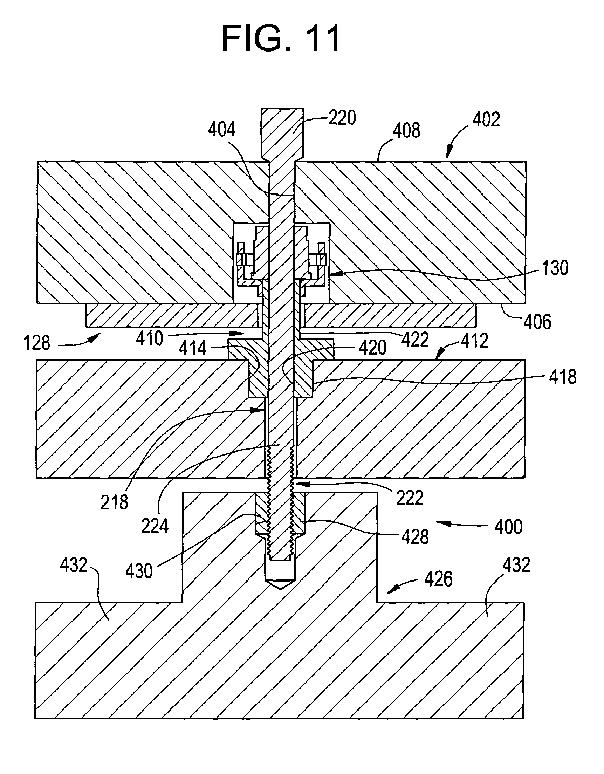

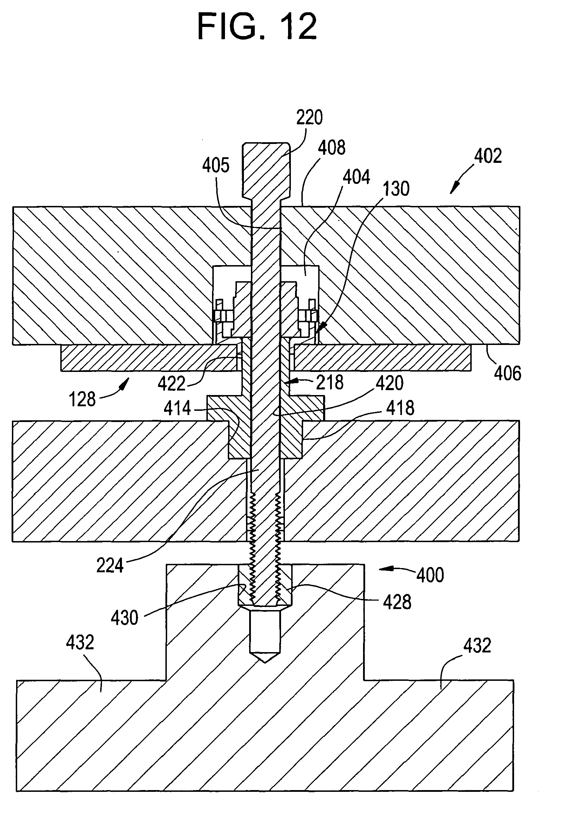

During removal of the nut plate 130, the mandrel 218 is extended through the nut plate 130, the nosepiece 410 and the nosepiece support 412, and the knob 426 is rotated such that the threaded portion 222 of mandrel 218 threads into the threaded insert 428 in the knob 426. As the knob 426 is rotated, the mandrel 218 effectively retracts into the knob 426, causing the base 402 to be pulled toward the workpiece 128, causing the end surface 424 of the nosepiece 410 to push on the nut plate 130, as shown in Figure 11, and causing the nut plate 130 to dislodge from the aperture 132 in the workpiece 128, as shown in Figure 12. Subsequently, the knob 426 is rotated in the opposite direction to threadably disengage from the mandrel 218, at which time the knob 426 can be withdrawn from one side of the workpiece 128, and the base 402, mandrel 218 and nut plate 130 can be withdrawn from the other side of the workpiece 128.

The version of the tool 100, 200, 300, 400 (i.e., that which is shown in Figures 1, 4, 7 or 10) which is chosen to effect removal of an installed nut plate will typically depend on how much space there is to effect the operation, as well as whether time is of the essence. Regardless of which version of the tool is used, the tool provides for the clean removal of an installed nut plate, without having to exercise any special skill.

Typically, when a rivetless nut plate is removed, the circumferential edge of the hole is deformed with a minor countersink and the hole itself is slightly enlarged. Another aspect of the present invention provides a tool for conditioning a hole, such as for conditioning a hole prior to reinstalling another nut plate. Specifically, the tool eliminates the minor countersink, effectively repairs the circumferential edge of the hole, conditions the inner walls of the hole, and reduces the hole size while introducing compressive residual stress into the workpiece area surrounding the hole.

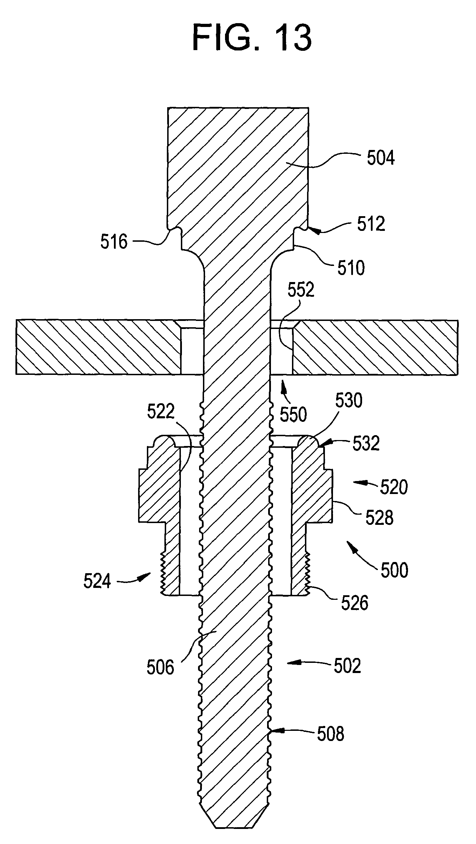

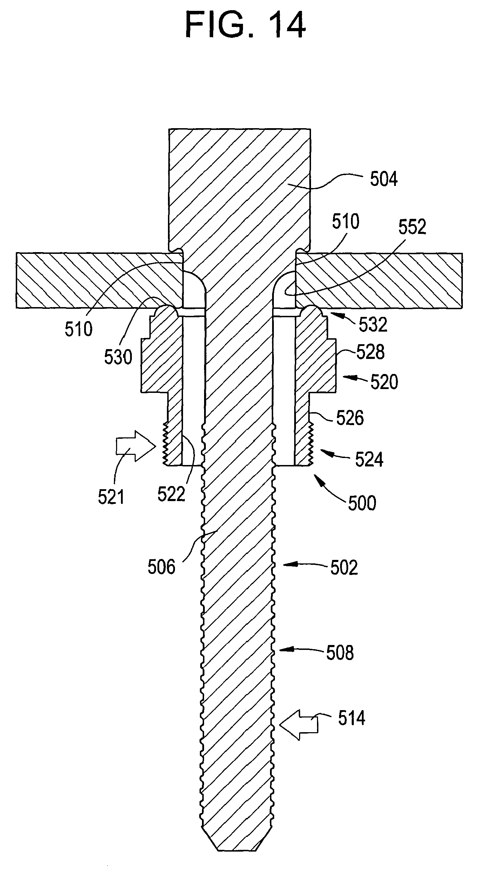

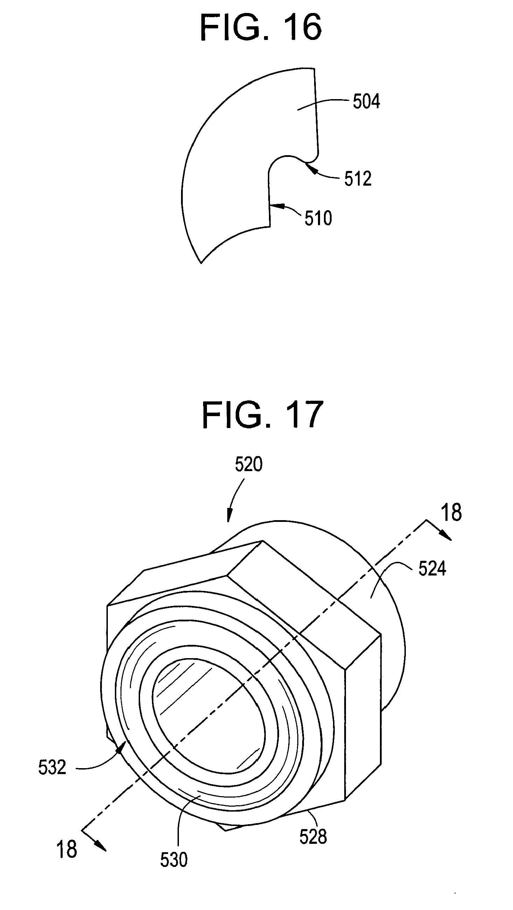

As shown in Figure 13, the tool 500 includes a mandrel 502 having an enlarged head portion 504 and a shaft portion 506 extending from the head 504. Preferably, serrations 508 are provided on the shaft portion 506 of the mandrel 502 for gripping and pulling by a power tool 118 (engagement with the power tool 118 is represented by arrow 521 in Figure 14), such as has been described in connection with the tools shown in Figures 1 and 7 (such as Textron's Lightweight CherryMax® Power Tool Model G704B). As shown in Figures 13 and 16, a plug portion 510 is provided under the head 504 of the mandrel 502. Additionally, a circumferential rim and ring portion 512 is provided on the underside 516 of the head 504. The rim and ring portion 512 is configured to apply a compressive load during conditioning of a hole, as will be described.

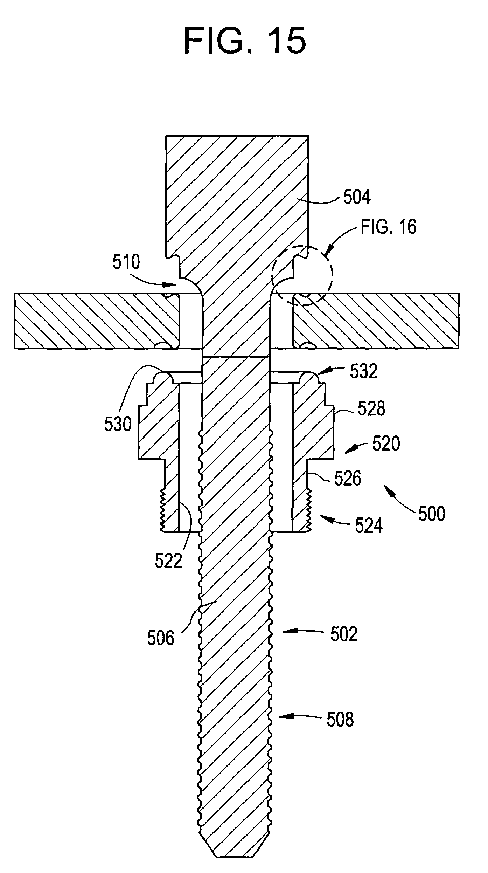

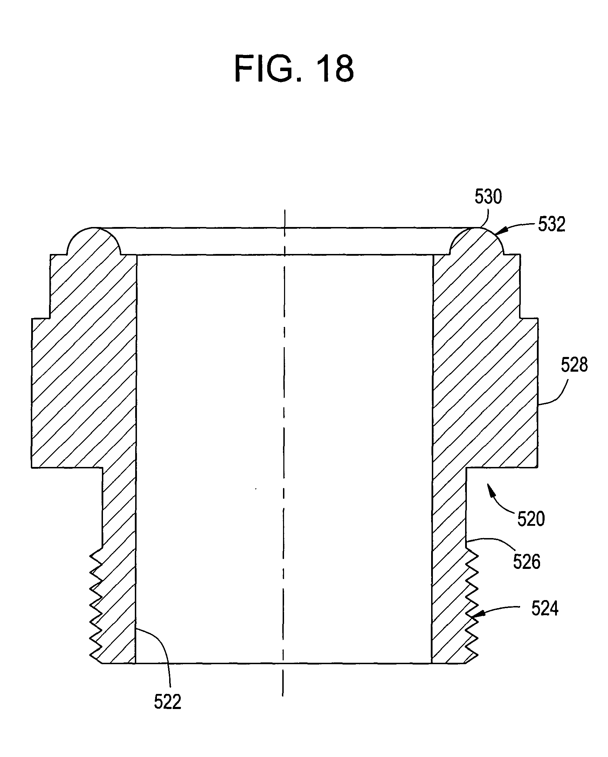

As shown in Figures 13-15, 17 and 18, the tool 500 also includes a nosepiece 520. The nosepiece 520 is configured for engagement with the power tool 118 (engagement with the power tool 118 is represented by arrow 521 in Figure 14). Specifically, the nosepiece 520 is generally cylindrical, having a longitudinal throughbore 522, and includes threads 524 on an external surface 526 for threadably engaging corresponding threads in the power tool 118. The nosepiece 520 preferably includes a hexagonally-shaped external surface 528 for engagement with a hex tool, and includes a circumferential rim 530 (preferably having a radius of 0.030 inches) on its facing surface 532. The rim 530 is configured to apply a compressive load during conditioning of a hole, as will be described.

As shown in Figure 13, in use, the mandrel 502 is extended through the hole 550 and the nosepiece 520, and is inserted into the power tool 118, such that the rim 512 on the underside 516 of the head 504 of the mandrel 502 contacts the workpiece 128 and surrounds the hole 550. Additionally, the nosepiece 520 is pressed against the opposite side of the workpiece 128. As such, the rim 530 on the nosepiece 520 is pressed against one side of the workpiece 128 and the rim 518 on the mandrel 502 is pressed against the other side of the workpiece 128. Then, the power tool 118 is actuated to grip and pull on the mandrel 502 (as represented by arrow 514 in Figure 14). After initial application of the load, the plug portion 510 of the mandrel 502 is drawn partially through the hole 550 as shown in Figure 14. The plug 510 engages with the inner wall 552 of the hole 550 and insures a smooth finish on the inner wall 552. Upon further application of the load, the rim and ring portion 512 of the mandrel 502 embeds into the structure of the workpiece 128 surrounding the hole 550. The structure surrounding the hole is molded into the shape of the rim and ring 512 of the mandrel 502. As the applied load value increases, the rim and ring 512 radially fill in the countersink and form a smooth rounded edge around the hole 550. Meanwhile, the base of the structure is compressed with the rim 530 of the nosepiece 520. The nosepiece 520 causes the material surrounding the nosepiece rim 530 to budge outwards in all directions, which causes residual stresses in the material. Also, the structure at the edge of the hole 550 bulges into the hole 550 and reduces the nominal size of the hole 550. The power tool 118 is disengaged once the predetermined load is reached, which is preferably at approximately 9000 pounds. Then, the mandrel 502 is removed from the power tool 118.

The tool 500 introduces compressive residual stresses in the structure surrounding the hole that is being conditioned. The structure inside the hole is compressed by the plug section 510 of the mandrel 502. The top edge of the hole is compressed by the rim 530 of the nosepiece 520. All of these compressive forces help to negate some of the tensile stress concentrations that appear in the structure naturally due to the hole in the structure. The overall result is lowered stresses at the hole, which leads to a strengthened structure.

While embodiments of the present invention are shown and described, it is envisioned that those skilled in the art may devise various modifications of the present invention without departing from the spirit and scope of the disclosure.

## Claims

1. A tool (100, 200) for removing a nut plate (130) from an aperture (132) in a workpiece (128), said tool (100, 200) **characterized by**: either a nosepiece (102) or a base (202) which is configured to be pressed against the workpiece (128) such that the nut plate (130) is disposed in an opening (124, 208) provided in the nosepiece (102) or base (202); a mandrel (136, 218) having a head (138, 220) and configured for insertion through the nut plate (130) and the nosepiece (102) or base (202), wherein said mandrel (136, 218) is configured for movement causing the head (138, 220) of the mandrel (136, 218) to contact and pull on the nut plate(130), causing the nut plate (130) to dislodge from the aperture (132) in the workpiece (128).

2. A tool (100) as recited in claim 1, **characterized in that** said either a nosepiece (102) or a base (202) comprises a nosepiece (102) which is configured to be engaged with a power tool (118), wherein the mandrel (136) is configured for insertion through the nosepiece (102) into the power tool (118), wherein the power tool (118) is thereafter actuateable to grip and pull on the mandrel (136), wherein the mandrel (136) pulls on the nut plate (130), causing the nut plate (130) to dislodge from the aperture (132) in the workpiece (128).

3. A tool (100) as recited in claim 2, **characterized in that** the nosepiece (102) comprises a cylindrical portion (104) and a bore (108) which is disposed in the cylindrical portion (104), wherein the mandrel (136) is insertable in the bore (108), said nosepiece (102) further comprising extending walls (122) which are configured to contact the workpiece (128) during operation of the tool (100).

4. A tool (200) as recited in claim 1, **characterized in that** said either a nosepiece (102) or a base (202) comprises a base (202), wherein said tool (200) further comprises a knob (210) which is configured to threadably engage the mandrel (218) and contact the base (202), wherein the knob (210) is configured such that rotation of the knob (210) causes the head (220) of the mandrel (218) to pull on the nut plate (130), causing the nut plate (130) to dislodge from the aperture (132) in the workpiece (128).

5. A tool (200) as recited in claim 4, **characterized in that** the base (202) comprises a plurality of spaced apart portions (203) which are configured to contact the workpiece (128) during operation of the tool (200).

6. A tool (300, 400) for removing a nut plate (130) from an aperture (132) in a workpiece (128), said tool (300, 400) **characterized by**: a base (318, 402) which is configured to be pressed against the workpiece (128) such that the nut plate (130) is disposed in an opening (324, 404) provided in the base (318, 402); a nosepiece (302, 410); and a mandrel (136, 218) having a head (138, 220) and configured for insertion through the base (318, 402), the nut plate (130) and into the nosepiece (302, 410), wherein said mandrel (136, 218) is configured for contacting said base (318, 402) and said nosepiece (302, 410) is configured for contacting and pushing on the nut plate (130), causing the nut plate (130) to dislodge from the aperture (132) in the workpiece (128).

7. A tool (300) as recited in claim 6, **characterized in that** said nosepiece (302) is configured for engagement with a power tool (118), wherein the mandrel (136) is configured for insertion through the nosepiece (302) into the power tool (118), wherein the power tool (118) is thereafter actuateable to grip and pull on the mandrel (136), wherein the head (138) of the mandrel (136) contacts the base (318), and wherein the nosepiece (302) pushes on the nut plate (130) to dislodge the nut plate (130) from the aperture (132) in the workpiece (128).

8. A tool (400) as recited in claim 6, **characterized in that** the nosepiece (410) is provided on a nosepiece support (412), said tool (400) further comprising a knob (426) which is configured to threadably engage the mandrel (218) and contact the nosepiece support (412), wherein the knob (426) is configured such that rotation of the knob (426) causes the nosepiece (410) to contact and push on the nut plate (130), causing the nut plate (130) to dislodge from the aperture (132) in the workpiece (128).

9. A tool (300) as recited in claim 6, **characterized in that** the base (318) comprises a cylindrical wall (322) which is configured to contact the workpiece (128) during operation of the tool (300).

10. A tool (500) for conditioning a hole (550), such as for conditioning a hole (550) prior to installing a nut plate, said tool (500) **characterized by** a mandrel (502) having a head (504) and serrations (508) as well as a rim (512) on the underside (516) of its head (504), and a nosepiece (520) configured for engagement with a power tool (118) and for contacting a workpiece (128), wherein the mandrel (502) is configured to extend through the hole (550), the nosepiece (520), and into the power tool (118), such that the (512) on the underside (516) of the head (504) of the mandrel (502) contacts the workpiece (128) and surrounds the hole (550), wherein the rim (512) on the mandrel (502) is configured to press against the workpiece (128), wherein the power tool (118) is actuateable to grip and pull on the mandrel (502), causing the rim (512) to push into the workpiece (128), thereby applying a compressive force to the workpiece (128) in an area around the hole (550), causing the area of the workpiece (128) surrounding the hole to reshape and become fatigue enhanced.

11. A tool (500) as recited in claim 10, **characterized in that** the nosepiece (520) also has a rim (530) on its facing surface (532), such that, in use, the rim (530) on the facing surface (532) surrounds the hole (550), wherein the rim (530) on the nosepiece (520) is configured to press against one side of the workpiece (128) and the rim (512) of the head (504) of the mandrel (502) is configured to press against the other side of the workpiece (128), wherein when the power tool (118) is actuated to grip and pull on the mandrel (502), the rims (512, 530) are pulled toward each other.

12. A tool (500) as recited in claim 11, **characterized in that** the tool (500) is configured to reshape the hole (550) such that the hole (550) becomes smaller.

13. A tool (500) as recited in claim 10, **characterized in that** the nosepiece (520) is generally cylindrical having a throughbore (522).

14. A tool (500) as recited in claim 13, **characterized in that** at least a portion of the external surface (528) of the nosepiece (520) is hexagonally-shaped.
